(19) Europäisches Patentamt
European Patent Office
Office européen des brevets

(11) Publication number: 0 026 987 A1

(12) EUROPEAN PATENT APPLICATION

(21) Application number: 80303177.2

(22) Date of filing: 10.09.80

(51) Int. Cl.³: C 08 F 10/00, C 08 F 4/64

(30) Priority: 04.10.79 GB 7934509

(43) Date of publication of application: 15.04.81 Bulletin 81/15

(84) Designated Contracting States: BE DE FR GB IT NL

(71) Applicant: IMPERIAL CHEMICAL INDUSTRIES LIMITED, Imperial Chemical House Millbank, London SW1P 3JF (GB)

(72) Inventor: Hartshorn, Angus John, 44 Cheltenham Crescent, Runcorn Cheshire (GB)

(74) Representative: Hartley, Kenneth et al, Imperial Chemical Industries Limited Legal Department, Patents Thames House North Millbank, London SW1P 4QG (GB)

# (54) Polymerisation catalysts and process for the homo- or co-polymerisation of alpha-olefins.

(57) A metal composition suitable as an initiator for olefin polymerisation which is the product of reacting a particulate support material, preferably having a reactive surface which is free from water, with an organometallic compound of the general formula

$R^1_3M$

and an organometallic compound of the general formula

$R^2_{4-p}ZrX_p$ or $R^2_{4-p}HfX_p$

wherein M is a metal of Group IIIB of the Periodic Table, $R^1$ and $R^2$ are hydrocarbyl or substituted hydrocarbyl groups, X, when present, is a singly charged anionic ligand or a monodentate ligand, and p is 0, 1 or 2.

EP 0 026 987 A1

0026987



TITLE MODIFIED
see front page

Polymerisation Catalysts

This invention relates to metal compositions in which an organometallic compound and a transition metal organometallic compound are chemically bonded to a substantially inert matrix material, and to processes for the polymerisation of olefinically unsaturated monomers using such compositions as initiators.

Transition metal compositions in which an organometallic compound of a transition metal of Groups IVA to VIA of the Periodic Table of Elements is chemically bonded to a substantially inert matrix material are described and claimed in our British Patent No 1,314,828.

Further in our British Patent No 1,475,184 there is described a process for the polymerisation of ethylene and propylene and the copolymerisation of ethylene with mono α-olefins, especially butene-1 and hexene-1, using a catalyst comprising a Group IVA transition metal hydrocarbyl compound supported on particulate alumina in which the group IVA metal compound is of a very high degree of purity, so as to increase the degree of incorporation of the said other olefin in the product copolymer.

The Group IVA metal hydrocarbyl compounds useful in the practice of the invention claimed in British Patent Nos. 1,314,828 and 1,475,184 are commonly produced by reacting a Group IVA metal compound, e.g. the halide, with a hydrocarbyl compound of a Group I to III metal. The term "very high degree of purity" means that the ratio of the amount of Group IVA metal to the amount of Group I to III metal in Group IVA metal hydrocarbyl compounds is at least 100:1, each expressed in gram atoms.

US Patent 3,635,935 (Hercules Incorporated) claims a process for polymerising ethylene which comprises contacting ethylene with a catalyst comprising (a) a tetra(aralkyl) titanium compound extended on a silica support in a ratio from about 0.01 to about 0.4 millimole of said titanium compound per gram of silica and (b) an organoaluminium compound, the molar ratio of the organoaluminium compound to the titanium compound being within the range of from about 1:1 to about 100:1. The preferred organoaluminium compounds are dialkylaluminium chlorides, for example diethylaluminium chloride. The use of supports other than silica are described, for example alumina and silica-alumina.

We have now found that when the matrix material is reacted with (1) a Group IIIB metal hydrocarbyl compound and (2) a zirconium or hafnium hydrocarbyl compound stable chemical entities are produced which may be used as initiators for the polymerisation of olefinically unsaturated monomers and certain of which have higher activities than the corresponding Group IVA transition metal compositions disclosed in British Patent No. 1,314,828 and the compositions described in US Patent 3,635,935.

Accordingly, one aspect of the present invention provides a metal composition which is the product of reacting a particulate support material, preferably having a reactive surface (as hereinafter defined) which

is free from water with an organometallic compound of the general formula:

$$R^1_3M \qquad I$$

and an organometallic compound of the general formula:

$$R^2_4ZrX_p \quad \text{or} \quad R^2_4HfX_p \qquad II$$

wherein M is a metal of Group IIIB of the Periodic Table, $R^1$ and $R^2$ are hydrocarbyl or substituted hydrocarbyl groups, X, when present, is a singly charged anionic ligand, or a monodentate ligand, and p is 0, 1 or 2.

All references to the Periodic Table are to the version of the Periodic Table of the Elements shown in "Advanced Inorganic Chemistry" by F A Cotton and G Wilkinson, 3rd Edition, Interscience Publishers 1976.

Hydrocarbyl groups of different types may be associated with a single metal atom.

The hydrocarbyl group $R^1$ preferably is an alkyl group containing less than 20 carbon atoms and more preferably an alkyl group containing 2 to 8 carbon atoms.

The metal M is preferably aluminium.

A preferred class of Group IIIB metal hydrocarbyl compounds are those which are soluble in a liquid hydrocarbon, e.g. toluene, hexane.

Examples of Group IIIB metal hydrocarbyl compounds include aluminium triethyl and aluminium tributyl.

The monovalent ligand X, where it is present, is preferably a halogen.

Suitable hydrocarbyl groups $R^2$ include straight chain and cyclic alkyl groups and substituted derivati

thereof; and alkenyl groups (including π-alkenyl groups such as π-allyl) and substituted derivatives thereof e.g. tetrakis (π-allyl)zirconium or hafnium, tetrakis (π-methyl allyl)zirconium or hafnium and zirconium tris (π-allyl)bromide.

The hydrocarbyl group $R^2$ is preferably a substituted alkyl group of general formula:

$$-CH_2Y \qquad \text{III}$$

which is σ-bonded to the zirconium or hafnium through the carbon atom as indicated. Preferably all the groups $R^2$ have general formula III, but it is possible for some of them to comprise other hydrocarbyl groups.

Suitable substituent groups Y include aromatic and polyaromatic groups such as phenyl and naphthyl, giving rise in general formula III to alkaryl ligands benzyl and (1-methylene-1-naphthyl) and ring substituted derivatives thereof, for example p-methyl benzyl.

Y may also be a cycloalkenyl group, such as a cyclo-octenyl group.

Y may also comprise a group of general formula:

$$Z(R^3)_3 \qquad \text{IV}$$

where Z represents carbon, silicon, germanium tin or lead and $R^3$ which may be the same or different, represents a hydrocarbyl group, for example alkyl (especially methyl) or aryl (especially phenyl). The group $(R^3)_3$ of formula IV preferably contains a mixture of alkyl (especially methyl) and aryl (especially phenyl) groups, for example when $(R^3)_3$ is dimethylphenyl.

Examples of this preferred class of organometallic

compounds $R^2_4ZrX_p$ and $R^2_4HfX_p$ include zirconium and hafnium tetra(benzyl), zirconium tetrakis (p-methylbenzyl), zirconium and hafnium tetrakis (1-methylene-1-naphthyl), zirconium tetrakis (trimethylsilylmethylene), zirconium tetrakis (neopentyl) and zirconium tetrakis (neophyl).

Examples of preferred organometallic compounds $R^2_4ZrX_p$ and $R^2_4HfX_p$ containing monovalent ligands X include tris (π-allyl) zirconium chloride, bromide or iodide and the equivalent π-methylallyl and benzyl compounds.

By "reactive surface" we mean a plurality of sites on, and preferably attached to, the surface of the substantially inert particulate support material, which sites are capable of abstracting, e.g. a magnesium hydrocarbyl from a solution thereof. Preferably the said sites are OH groups chemically bonded to the surface of the particulate support material and the particulate support material is an inorganic material. Where surface OH groups are present they are capable of acting as a proton source, that is they have an acidic function. Such a material will be "substantially inert" in that, whereas the said -OH groups are capable of reacting with, say, the Group IIIB metal organometallic compounds and the zirconium or hafnium organometallic compounds, the bulk of the support material is chemically inert. Particularly good examples of such support materials are silica and alumina or mixtures thereof. These comprise a matrix of silicon or aluminium and oxygen atoms, to the surface of which -OH groups are attached, the hydrogen atoms of said groups having an acidic function. However, apart from the presence of these -OH groups, silica and alumina are generally regarded as chemically inert. Within the terms silica and alumina we include silica and alumina based materials containing small amounts of other suitable inorganic

oxides, such as magnesium oxide and zinc oxide. The preferred matrix is alumina.

It is essential that the support material is freed from adsorbed water, as this would merely react with and destroy the Group IIIB, zirconium or hafnium organometallic compounds. The support materials may be readily freed from such adsorbed water by, for example a simple thermal treatment.

The reaction between the support material and Group IIIB metal organometallic compound or zirconium or hafnium organometallic compound comprises displacement of one or more of the hydrocarbyl groups by the hydrogen atom of an OH group or groups of the support material, with liberation of the corresponding free hydrocarbon. When the organometallic compounds are added consecutively and the support material has reacted with the first of the organometallic compounds, it is important that there should be sufficient residual hydroxylic groups for the subsequent reaction with the other organometallic compound.

When the zirconium or hafnium organometallic compounds are reacted, all except one of the hydrocarbyl groups of the organometallic compound may be displaced by -OH groups of the support material, so that there is at least always one hydrocarbyl group attached to the transition metal in the product. This appears to be independent of the number of reactable hydroxylic groups present on the surface of the support material.

The number of reactable hydroxylic groups, that is, the number available for reaction with Group IIIB organometallic compounds and zirconium or hafnium organometallic compounds will depend on the nature and condition of the support material. For example, in some materials, because of their molecular configuration, some of the hydroxylic groups present are not reactive under our conditions.

The progress of the reaction with the Group IIIB metal organometallic compound is most conveniently followed by analysis of the supernatant solutions. Reaction of the group IVA transition metal organometallic compounds occurs in substantially the same way as disclosed in our British Patent No 1,314,828.

The number of reactive hydroxylic groups present in a given weight of support material will depend upon its nature (for example, whether it is silica or alumina) and its condition (for example, its surface area and the treatment it has received to remove adsorbed water). Thus the precise composition of metal compositions according to our invention may vary from one batch or sample to another of the same support material; but successive portions of the same material prepared under identical conditions will give products having the same composition.

The ratio of gram atoms of Group IIIB metal to gram atoms of zirconium or hafnium in the metal compositions of the present invention may be varied within wide limits. Typically the ratio is between 0.05:1 and 100:1, preferably 0.1:1 to 25:1, although higher ratios are not deleterious to catalytic activity.

The proportion of zirconium or hafnium organometallic compound in the metal compositions of the present invention is suitably in the range 0.01 to 1.0 millimole/g, and preferably in the range 0.05 to 0.5 millimole/g.

The group IIIB metal organometallic compound may be reacted with the matrix before, at the same time as, or after the reaction of the zirconium or hafnium organometallic compound with the matrix.

Compositions according to the present invention may be prepared by first contacting a solution of the Group IIIB metal organometallic compound or zirconium or hafnium organometallic compound with a suitable support

material, in the absence of free or adsorbed water. The solvents used for the compounds should be dry and inert; hydrocarbon solvents are preferred. The support is then contacted with the other organometallic compound. Alternatively the compounds may be added concurrently. Most preferably the zirconium or hafnium organometallic compound is reacted with the support material before adding the Group IIIB organometallic compound when the Group III organometallic compound is an aluminium hydrocarbyl in which the hydrocarbyl group contains four carbon atoms or more.

Since many of the zirconium and hafnium organometallic compounds which may be used in our process are thermally unstable, the reaction temperature in this stage of the process must be maintained low enough to avoid decomposition of the compounds. With some compounds, temperatures below $0^{\circ}C$ are required.

An alternative method for preparing metal compositions according to our invention comprises, first, adding excess of either Group IVA transition metal organometallic compound (e.g. titanium, zirconium or hafnium hydrocarbyl compound) or a Grignard reagent (magnesium hydrocarbyl compound) to a sample of the support material, determining the number of molecules of hydrocarbon liberated, and then adding to a further sample of the support material Group IIIB metal organometallic compound and zirconium or hafnium organometallic compound which in combination are up to the amount required to liberate an equivalent amount of hydrocarbon. For example, a sample of the support material may be suspended in a solvent and excess of a Group IVA transition metal benzyl added. The amount of toluene produced is measured and related to the weight of support material. A second sample of the support material is then taken and a zirconium of hafnium hydrocarbyl is added, followed by a Group IIIB

metal hydrocarbyl.

The compositions defined above can be used as initiators for the polymerisation of olefinically unsaturated monomers. In this specification we intend the term "polymerisation" to mean the formation of high molecular weight polymers and we also intend the term to exclude oligomerisation to low molecular weight materials.

According to a second aspect of the present invention olefinically unsaturated monomers are polymerised by means of an initiator which comprises a metal composition which is the product of reacting a particulate support material, preferably having a reactive surface (as hereinbefore defined) which is free from water with an organometallic compound of the general formula:

$$R^1_3M \qquad I$$

and an organometallic compound of the general formula:

$$R^2_4ZrX_p \quad \text{or} \quad R^2_4HfX_p \qquad II$$

wherein M is a metal of Group IIIB of the Periodic Table, $R^1$ and $R^2$ are hydrocarbyl or substituted hydrocarbyl groups as hereinbefore defined, X, when present, is a singly charged anionic ligand or monodentate ligand as hereinbefore defined, and p is 0, 1 or 2.

The term "olefinically unsaturated monomer" is intended to include mono-olefins such as ethylene, propylene and 4-methylpentene-1.

Our compositions may also be used to initiate the copolymerisation of two or more olefinically

unsaturated monomers. For example, ethylene may be copolymerised with propylene, butene, hexene or decene, butadiene or styrene.

Polymerisation processes according to our invention may be carried out by techniques generally used for free radical initiated polymerisation or for polymerisation processes of the type using Ziegler catalysts.

The choice of conditions of pressure and temperature will vary with factors such as the nature of the monomer and initiator, and whether liquid, e.g. bulk or diluent, or gas phase polymerisation is used.

For example, when ethylene is polymerised, pressures from sub-atmospheric to several thousand atmospheres may be used. Low pressure, (say from 0.1 to 30 atmospheres) and intermediate pressure (say from 30 to 300 atmospheres) polymerisations may be carried out using conventional equipment; but very high pressure polymerisation must be performed using suitable specialised reactors and pumping equipment. However, since, generally speaking, the higher the pressure the higher the activity, the use of such techniques may be justified. If very high pressures are used, it is preferred that conditions are such that the ethylene feed and polyethylene produced are maintained in a single fluid phase, i.e. the pressure should exceed 500 $Kg/cm^2$, preferably 1000 to 3000 $Kg/cm^2$ and the temperature should be greater than 125$^oC$, say 140-300$^oC$. This type of process is usually operated in a continuous manner.

A wide range of temperatures may be used, but in general low and intermediate pressure ethylene polymerisations are carried out at temperatures in the range 50-160$^oC$.

When the process of our invention is used to polymerise propylene, it is preferred to operate under conditions commonly used for the polymerisation of

propylene. However, polymerisation of propylene under other conditions e.g. high pressure, is not excluded.

It is also within the scope of our invention to use our compositions to initiate the copolymerisation of ethylene and propylene together and/or with other olefinically unsaturated monomers.

The polymerisation process of the present invention may be carried out in the liquid or gaseous phase (i.e. in the essential absence of aliquid medium) and preferably in the gaseous phase. Where polymerisation is effected in the liquid phase, and the monomer is not liquid under the polymerisation conditions, the monomer may be dissolved in a suitable solvent. Examples of suitable solvents are aliphatic or aromatic hydrocarbons; for instance pentane, hexane, heptane, octane, decane, benzene, toluene and mixtures thereof.

Polymerisation may be effected either in a batch manner or on a continuous basis. Preferably, however, the polymerisation process of the present invention is effected as a continuous gas phase process such as a fluid bed process. A fluid bed reactor for use in the process of the present invention typically comprises a reaction zone and a so-called velocity reduction zone. The reaction zone comprises a bed of growing polymer particles, formed polymer particles and a minor amount of initiator particles fluidised by the continuous flow of the gaseous monomer, and gaseous diluent to remove heat of polymerisation through the reaction zone. A suitable rate of gas flow may be readily determined by simple experiment. Make up of gaseous monomer to the circulating gas stream is at a rate equal to the rate at which particulate polymer product is withdrawn from the reactor and the composition of the gas passing through the reactor is adjusted to maintain an essentially steady state gaseous composition within the reaction zone. The gas leaving the reaction zone is

passed to the velocity reduction zone where entrained particles are removed. Finer entrained particles and dust may be removed in a cyclone and/or fine filter. The said gas is compressed in a compressor and passed through a heat exchanger wherein it is stripped of the heat of polymerisation and then returned to the reaction zone.

Chain transfer agents may be used in a polymerisation process according to our invention, and when ethylene is polymerised their use is normally desirable as the polyethylene produced is of very high molecular weight. Hydrogen may be conveniently used in accordance with usual practice. However, some solvents may act as chain transfer agents.

Our process is preferably effected under an atmosphere free of oxygen, for example under an atmosphere of an inert gas, e.g. nitrogen, or of the monomer to be polymerised. It is also preferred to effect the process using apparatus and solvents which have been carefully freed from impurities, such as oxygen, water and other substances which would otherwise react with the initiators.

The invention is illustrated by the following Examples.

In the examples iso-octane was purified by passage through $R_{3-11}$ copper catalyst and 5A molecular sieve and finally by sparging with pure nitrogen immediately before use.

Ethylene was purified by passage through $R_{3-11}$ copper catalyst and 5A molecular sieve.

Example 1

A particulate support material, KETJEN (Registered Trade Mark) Grade B alumina (supplied by Koninklijke Zwavelzurfabricken v/L Ketjen N.V.) was dried and converted to the gamma phase by heating at 500°C for 2 hours under a flow of dry nitrogen.

18.66 g of the alumina was slurried in 100 ml toluene in an atmosphere of dry nitrogen. 13 ml of a 0.5 M solution of triethyl aluminium in hexane was added dropwise with vigorous stirring over 10 minutes. The reaction mixture was stirred for 1 hour. Analysis of the supernatant solution showed no detectable aluminium. The solvent was removed and the alumina dried under vacuum at 60°C.

5.83 g of the support containing triethyl aluminium was slurried in 46.7 ml toluene.

11.6 ml of a 0.1 M solution of tetrabenzyl zirconium in toluene was added dropwise to the resultant slurry with vigorous stirring over 10 minutes, and the reaction mixture was stirred for a further hour. The catalyst thus obtained contained 0.35 m $A.g^{-1}$ (milliatom per gram alumina) of aluminium from the triethylaluminium and 0.21 m $A.g^{-1}$ of zirconium.

The polymerisation of ethylene was carried out as follows. A commercial hydrogenator (Hydrogenation Control Unit from Electrosound Supplies Ltd) was adapted to deliver ethylene to a 500 ml vessel containing 200 ml iso-octane at 80°C. The vessel was stirred with a VIBRO-MIXER E1 (supplied by Orme Scientific Ltd). 1.0 ml of the catalyst slurry was injected through a septum cap. The activity over the first hour was found to be 716 g polyethylene milliatom $zirconium^{-1}bar^{-1}hr^{-1}$.

Example 2

6.47 g of the triethylaluminium treated alumina prepared as described in Example 1 was slurried in 523 ml toluene and 2.59 ml of a 0.5 M solution of triethylaluminium in hexane was added dropwise with stirring over 10 minutes. The slurry was stirred and heated to 60°C for 1 hour and allowed to cool at room temperature. 9.15 ml of a 0.1 M solution of tetrabenzyl zirconium in toluene was added dropwise to the resultant slurry with vigorous stirring over 10 minutes and the reaction mixture

was stirred for a further hour. The catalyst thus obtained contained 0.55 $mA.g^{-1}$ of aluminium from the triethyl aluminium and 0.15 $mA.g^{-1}$ of zirconium.

The polymerisation of ethylene was carried out as described in Example 1. The activity over the first hour was foundto be 450 g polyethylene milliatom $zirconium^{-1}$ $bar^{-1}$ $hr^{-1}$.

Example 3

4.86 ml of a 0.5 M solution of triethylaluminium in hexane and 12.16 ml of a 0.2 M solution of tetrabenzyl zirconium in toluene were added to 20 ml toluene. This mixture was added dropwise to 9.73 g of the γ-alumina slurried in 186 ml of toluene and stirred for 1 hour. The catalyst thus obtained contained 0.25 m $A.g^{-1}$ of aluminium from the triethylaluminium and 0.25 m $A.g^{-1}$ of zirconium.

The polymerisation of ethylene was carried out as described in Example 1. The activity over the first hour was found to be 497 g polyethylene milliatom $zirconium^{-1}$ $bar^{-1}$ $hr^{-1}$.

Example 4

9.56 g of γ-alumina was slurried in 129 ml toluene and 4.8 ml of a 0.2 M solution of tetrabenzyl zirconium in toluene was added dropwise over a 10 minute period with stirring. The mixture was stirred for 1 hour and then 9.56 ml of a 1.0 M solution of tri-n-butyl aluminium in toluene was added dropwise over a 10 minute period with stirring. The mixture was stirred for 1 hour. The catalyst thus obtained contained 1 m $A.g^{-1}$ of aluminium from the tri-n-butyl aluminium and 0.1 m $A.g^{-1}$ zirconium.

The polymerisation of ethylene was carried out as described in Example 1. The activity over the first hour was found to be 853 g polyethylene milliatom $zirconium^{-1}$ $bar^{-1}hr^{-1}$.

Example 5

6.4 g of the γ-alumina was slurried in 80 ml heptane and 3.84 ml of a 0.5 M solution of triethylaluminium was

added dropwise over a 10 minute period with stirring. The mixture was stirred for 1 hour and then 3.2 ml of a 0.2 M solution of tetrabenzylhafnium in toluene was added dropwise. The catalyst thus obtained contained 0.3 m $A.g^{-1}$ of aluminium from the triethylaluminium and 0.1 m $A.g^{-1}$ zirconium.

The polymerisation of ethylene was carried out as described in Example 1. The activity over the first hour was found to be 715 g polyethylene milliatom $zirconium^{-1}bar^{-1}hr^{-1}$.

<u>Example 6</u>

9.10 g of γ-alumina was slurried in 123 ml toluene and 4.55 ml of a 0.2 M solution of tetrabenzylzirconium in toluene was added dropwise. The mixture was stirred for 1 hour and then 9.1 ml of a 1.0 M solution of triethylaluminium in toluene was added dropwise. The catalyst thus obtained contained 1.0 m $A.g^{-1}$ of aluminium from the triethylaluminium and 0.1 m $A.g^{-1}$ zirconium.

The polymerisation of ethylene was carried out as described in Example 1. The activity over the first hour was found to be 344 g polyethylene milliatom $zirconium^{-1}bar^{-1}hr^{-1}$.

<u>Example 7</u>

11.90 g of γ-alumina was slurried in 80 ml toluene and 11.9 ml of a 1.0 M solution of tri-n-butylaluminium in toluene was added dropwise over a 10 minute period. The mixture was stirred for 1 hour and then 5.95 ml of a 0.2 M solution of tetrabenzylzirconium in toluene was added dropwise. The catalyst thus obtained contained 1.0 m $A.g^{-1}$ of aluminium from the tri-n-butylaluminium and 0.1 m $A.g^{-1}$ zirconium.

The polymerisation of ethylene was carried out as described in Example 1. The activity over the first hour was found to be 355 g polyethylene milliatom $zirconium^{-1}bar^{-1}hr^{-1}$.

Comparative Example A

25.55 g of γ-alumina was slurried in 374.3 ml toluene and 12.8 ml of a 0.2 M solution of tetrabenzylzirconium in toluene was added dropwise over a 10 minute period.

The catalyst contained 0.10 m $A.g^{-1}$ zirconium. The polymerisation of ethylene was carried out as described in Example 1. The activity over the first hour was found to be 414 g polyethylene milliatom $zirconium^{-1}$ $bar^{-1}hr^{-1}$.

Comparative Example B

11.30 g of γ-alumina was slurried in 107.4 ml toluene and 5.65 ml of a 0.2 M solution of tetrabenzylhafnium in toluene was added dropwise over a 10 minute period.

The catalyst contained 0.10 m $A.g^{-1}$ hafnium. The polymerisation of ethylene was carried out as described in Example 1. The activity over the first hour was found to be 403 g polyethylene milliatom $zirconium^{-1}$ $bar^{-1}hr^{-1}$.

Comparative Example C

25.55 g of γ-alumina was slurried in 323.2 ml toluene and 63.9 ml of a 0.2 M solution of tetrabenzylzirconium in toluene added dropwise over a 10 minute period.

The catalyst contained 0.5 m $A.g^{-1}$ zirconium. The polymerisation of ethylene was carried out as described in Example 1. The activity over the first hour was found to be 367 g polyethylene milliatom $zirconium^{-1}$ $bar^{-1}hr^{-1}$.

It can be seen from Comparative Examples A and B and C that a lower or comparable activity is obtained on omitting aluminium alkyls as compared with those obtained in Examples 1-7.

It can be seen from Examples 4 and 7 that when using aluminium butyl, a higher activity is obtained when the zirconium compound is added first.

TABLE 1

| Ex No | Aluminium Compound | Loading of Aluminium Compound mA. (g.support)$^{-1}$ | Loading of Zr/Hf Compound mA. (g. support)$^{-1}$ | Order of Addition | Ratio Al/Zr/Hf | Activity g.mA$^{-1}$bar$^{-1}$hr$^{-1}$ |
|---|---|---|---|---|---|---|
| 1 | $Al(Ethyl)_3$ | 0.35 | 0.21 (Zr) | Aluminium first | 1.7 | 716 |
| 2 | $Al(Ethyl)_3$ | 0.55 | 0.15 (Zr) | Aluminium first | 3.7 | 450 |
| 3 | $Al(Ethyl)_3$ | 0.25 | 0.25 (zr) | Mixed and loaded at same time | 1 | 499 |
| 4 | $Al(n\text{-}Butyl)_3$ | 1.0 | 0.1 (zr) | Zirconium first | 10 | 853 |
| 5 | $Al(Ethyl)_3$ | 0.3 | 0.1 (Hf) | Aluminium first | 3 | 715 |
| 6 | $Al(Ethyl)_3$ | 1.0 | 0.1 (Zr) | Zirconium first | 10 | 344 |
| 7 | $Al(n\text{-}Butyl)_3$ | 1.0 | 0.1 (zr) | Aluminium first | 10 | 355 |
| Comparative Ex. A | | - | 0.1 (Zr) | - | - | 414 |
| Comparative Ex. B | | - | 0.1 (Hf) | - | - | 403 |
| Comparative Ex. C | | - | 0.5 (Zr) | - | - | 367 |

1. A metal composition which is the product of reacting a particulate support material which is free from water with an organometallic compound of the general formula

$$R^1_3M$$

and an organometallic compound of the general formula

$$R^2_4ZrX_p \quad \text{or} \quad R^2_4HfX_p$$

wherein M is a metal of Group IIIB of the Periodic Table, $R^1$ and $R^2$ are hydrocarbyl or substituted hydrocarbyl groups, X, when present, is a singly charged anionic ligand or a monodentate ligand, and p is 0, 1 or 2.

2. A composition as claimed in claim 1 in which the particulate support material has a reactive surface.

3. A composition as claimed in claim 2 wherein the reactive surface comprises OH groups attached to the surface of a substantially inert particulate support material.

4. A composition as claimed in claim 3 in which the support material is alumina.

5. A composition as claimed in any one of the preceding claims wherein the hydrocarbyl group $R^1$ is an alkyl group having less than 20 carbon atoms.

6. A composition as claimed in claim 5 wherein the hydrocarbyl group $R^1$ has from 2 to 8 carbon atoms.

7. A composition as claimed in any one of the preceding claims wherein the metal M is aluminium.

8. A composition as claimed in claim 7 wherein the organometallic compound $R^1_3M$ is aluminium triethyl or aluminium tributyl.

9. A composition as claimed in any one of the preceding claims wherein the monovalent ligand X is a halogen.

10. A composition as claimed in any one of the preceding claims wherein the hydrocarbyl group $R^2$ is $\pi$-allyl or $\pi$-methylallyl.

11. A composition as claimed in claim 10 wherein the organometallic compound $R^2_4ZrX_p$ or $R^2_4HfX_p$ is selected from the group consisting of tetrakis ($\pi$-allyl) zirconium or hafnium, tetrakis ($\pi$-methylallyl) zirconium or hafnium and zirconium tris ($\pi$-allyl) bromide.

12. A composition as claimed in any one of claims 1 to 9 wherein the organometallic compound $R^2_4ZrX_p$ or $R^2_4HfX_p$ at least one of the hydrocarbon or substituted hydrocarbyl groups $R^2$ has the general formula $-CH_2Y$ and is sigma bonded to the transition metal Zr or Hf through the carbon atom where Y is selected from a mono or polyaromatic group, cycloalkenyl group or the group $Z(R^3)_3$ where Z represents carbon, silicon, germanium, tin or lead and $R^3$, which may be the same or different, represents a hydrocarbyl or substituted hydrocarbyl group or hydrogen.

13. A composition as claimed in claim 12 wherein $-CH_2Y$ is selected from the group consisting of benzyl, 1-methylene-1-naphthyl, p-methylbenzyl, trimethylsilylmethane, neopentyl and neophyl.

14. A composition as claimed in claim 13 wherein the organometallic compound $R^2_4ZrX_p$ $R^2_4TX_p$ is selected from the group consisting of zirconium and hafnium tetra (benzyl), tris (benzyl) zirconium chloride, zirconium tetrakis (p-methyl benzyl), zirconium and hafnium tetrakis (1-methylene-1-naphthyl), zirconium tetrakis (trimethylsilylmethylene), zirconium tetrakis (neopentyl)

and zirconium tetrakis (neophyl).

15. A composition as claimed in any one of the preceding claims wherein the ratio of gram atoms of Group IIIB metal to gram atoms of zirconium or hafnium is in the range 0.05:1 and 100:1.

16. A composition as claimed in claim 15 wherein the ratio is in the range 0.1:1 to 25:1.

17. A composition as claimed in any one of the preceding claims wherein the proportion of zirconium or hafnium organometallic compound is in the range 0.01 to 1.0 millimole/g.

18. A composition as claimed in claim 17 wherein the proportion is in the range 0.05 to 0.5 millimole/g.

19. A process for the preparation of a composition as claimed in any one of the preceding claims which comprises contacting in an inert liquid in the absence of free or adsorbed water a particulate support material, an organometallic compound of the general formula $R^1_3M$ (as hereinbefore defined) and an organometallic compound of the general formula $R^2_4ZrX_p$ or $R^2_4HfX_p$ (as hereinbefore defined), the said compound $R^1_3M$ being reacted with the particulate support material before, after or concurrently with the compound $R^2_4ZrX_p$ or $R^2_4HfX_p$.

20. A process as claimed in claim 19 wherein the organometallic compound $R^2_4ZrX_p$ or $R^2_4HfX_p$ is added before the organometallic compound $R^1_3M$ and wherein the organometallic compound $R^1_3M$ is an aluminium hydrocarbyl in which the hydrocarbyl group contains four carbon atoms or more.

21. A process for the polymerisation or copolymerisation on an olefinically unsaturated monomer which comprises contacting, under polymerisation conditions, at least one olefin monomer with an initiator comprising a composition as claimed in any one of claims 1 to 18.

22. A process as claimed in claim 21 wherein the monomer is ethylene, propylene or 4-methylpentene-1.

23. A process as claimed in claim 22 in which the monomer is ethylene and a chain transfer agent is added to the polymerisation mixture.

24. A process as claimed in claim 23 wherever effected in a fluidised bed reactor.

K HARTLEY
AGENT FOR THE APPLICANTS

0026987

European Patent Office

# EUROPEAN SEARCH REPORT

Application number

EP 80 30 3177

| Category | DOCUMENTS CONSIDERED TO BE RELEVANT — Citation of document with indication, where appropriate, of relevant passages | Relevant to claim | CLASSIFICATION OF THE APPLICATION (Int. Cl.) |
|---|---|---|---|
| X | GB - A - 1 336 881 (ICI)<br>* Claims 1-8,13-23; page 2, lines 25-32, lines 62-72, lines 91-112; page 4, lines 42-60 *<br>-- | 1-24 | C 08 F 10/00<br>4/64 |
| A | GB - A - 1 348 472 (HERCULES)<br>* Claims 1-17 *<br>---- | | |

TECHNICAL FIELDS SEARCHED (Int. Cl.)

C 08 F 10/00-10/14
110/00-110/14
210/00-210/16
4/64
4/62
4/60

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-01-1981 | WEBER |

EPO Form 1503.1 06.78

BAD ORIGINAL